# EUROPÄISCHE PATENTSCHRIFT

(11) **EP 0 573 814 B1**
(45) Veröffentlichungstag und Bekanntmachung des Hinweises auf die Patenterteilung: **05.06.1996**
(21) Anmeldenummer: 93107963.6
(22) Anmeldetag: 17.05.1993
(51) Int. Cl.: G01G 23/00

(54) **Waage mit Überlastschutz**
Scale with overload protection
Balance avec protection contre surcharge

(30) Priorität: 10.06.1992 CH 1854/92
(43) Veröffentlichungstag der Anmeldung: 15.12.1993
(73) Patentinhaber: Mettler-Toledo AG, CH-8606 Greifensee (CH)
(72) Erfinder: Schneider, Ferdinand, CH-8953 Dietikon (CH)

(56) Entgegenhaltungen:
- EP-A- 0 006 237
- DE-A- 3 242 156
- GB-A- 2 159 966
- US-A- 3 599 739
- US-A- 4 420 054

## Beschreibung

Die Erfindung betrifft eine Waage mit einem gegen Ueberlast gesicherten Wägesystem, bei dem zwischen einem Lastaufnehmer am Wägesystem und einer aufgesetzten Waagschale zwei schwenkbare Hebel eingesetzt sind, welche die Waagschale tragen, wobei die äusseren Hebelenden von unten an der Waagschale anliegen und deren innere Hebelenden in ein vertikal verschiebliches Widerlager eingreifen, wobei das Widerlager derart unter der Rückstellkraft einer vorgespannten Feder steht, dass bei Überlast beide Hebel schwenken und die Federkraft überwinden und für die sich absenkende Waagschale eine Parallelführung bilden.

Eine Waage dieser Gattung ist aus der DE-C2-3242156 bekannt. Bei der dort offenbarten Ueberlastsicherung für eine oberschalige Waage ist auf den Lastaufnehmer eine Plattform aufgesetzt, auf welcher zwei V-förmig ausgebildete plattenförmige Kipphebel aufliegen. Deren innere Enden untergreifen ein axial zum Lastaufnehmer angeordnetes, unter der Rückstellkraft einer vorgespannten Feder verschiebliches Federlager. Auf den äusseren Enden der Kipphebel liegt die Waagschale oder ein Waagschalenträger auf.

Wird die Waagschale mit einer Ueberlast beaufschlagt, so kippen die beiden Kipphebel um ihre linienförmige Auflage an der Plattform und leiten die auf die Unterschale wirkende Kraft in die Feder im Widerlager ein.

Diese bekannte Ueberlastsicherung, welche über der Messzelle und ausserhalb des Gehäuses angeordnet ist, schützt Waagen mit kleiner Nennlast genügend gegen Beschädigungen durch eine mässige Ueberlast.

Bei Waagen mit einem Lastbereich von zehn und mehr Kilogramm, die zudem aus bedienungstechnischen Gründen eine möglichst niedrige Bauhöhe aufweisen müssen, kann die bekannte Ueberlastsicherung nicht vorteilhaft eingesetzt werden. Zum einen können die als Übertragungselemente dienenden und aus Blech bestehenden Kipphebel nur geringe Kräfte bzw. geringe Überlasten überhaupt übertragen und zum anderen bedingt diese Vorrichtung eine Anordnung oberhalb der Wägezelle und ruft folglich eine unerwünschte Vergrösserung der Bauhöhe der Waage hervor.

Der Erfindung liegt daher die Aufgabe zugrunde, eine Vorrichtung zur Sicherung der Waage gegen Ueberlast zu schaffen, die sich innerhalb des Waagengehäuses und ohne Vergrösserung der Bauhöhe der Waage unterbringen lässt.

Gelöst wird diese Aufgabe durch eine Waage mit den Merkmalen des Anspruchs 1.

Die erfindungsgemässe Ueberlastsicherung ermöglicht einen biegestabilen Aufbau, so dass der Einsatz auch für Waagen im höheren Lastbereich möglich ist. Die stabile Konstruktion ergibt eine geringe Eckenlastempfindlichkeit. Die Überlast verteilt sich stets auf beide Rahmenteile, weil diese an deren Schenkelenden miteinander gekoppelt sind. Dadurch werden auch bei einer Eckenlast stets beide Federn im wesentlichen, d.h. innerhalb deren Elastizität, gleich beaufschlagt. Durch zwischen den Rahmenteilen und der Waagschale eingesetzte Gummielemente kann eine ausgezeichnete Dämpfung der durch eine dynamisch eingeleitete Ueberlast entstehenden Schwingungen erreicht werden. Die gleichen Rahmenelemente können für verschiedene Lastbereiche verwendet werden. Die Einstellung des Lastbereiches kann durch entsprechende Wahl der Härte der Feder im Widerlager und/oder deren Vorspannung eingestellt werden. Im weiteren ist es auch möglich, durch Veränderung des Abstandes der Schwenkachsen vom Widerlager das Hebelverhältnis und folglich die Charakteristik der Ueberlastsicherung zu verändern bzw. der Waage anzupassen. Die Überlast wird vorzugsweise von einem Anschlagteil aufgefangen, das direkt auf dem Boden des Waagengehäuses abgestützt ist. Der Gehäuseoberteil wird dadurch nicht belastet und muss auch nicht für die Aufnahme der Überlast ausgelegt werden. Die Seitenwände des Gehäuses und die obere Abdeckung können sehr dünnwandig ausgebildet sein und dienen im wesentlichen als Staub- und Spritzwasserschutz.

Anhand eines illustrierten Ausführungsbeispieles wird die Erfindung näher erläutert. Es zeigen:
- Figur 1: eine Schnittansicht einer nur schematisch dargestellten Waage,
- Figur 2: eine Aufsicht auf die U-förmigen Rahmenteile und das diese tragende Joch,

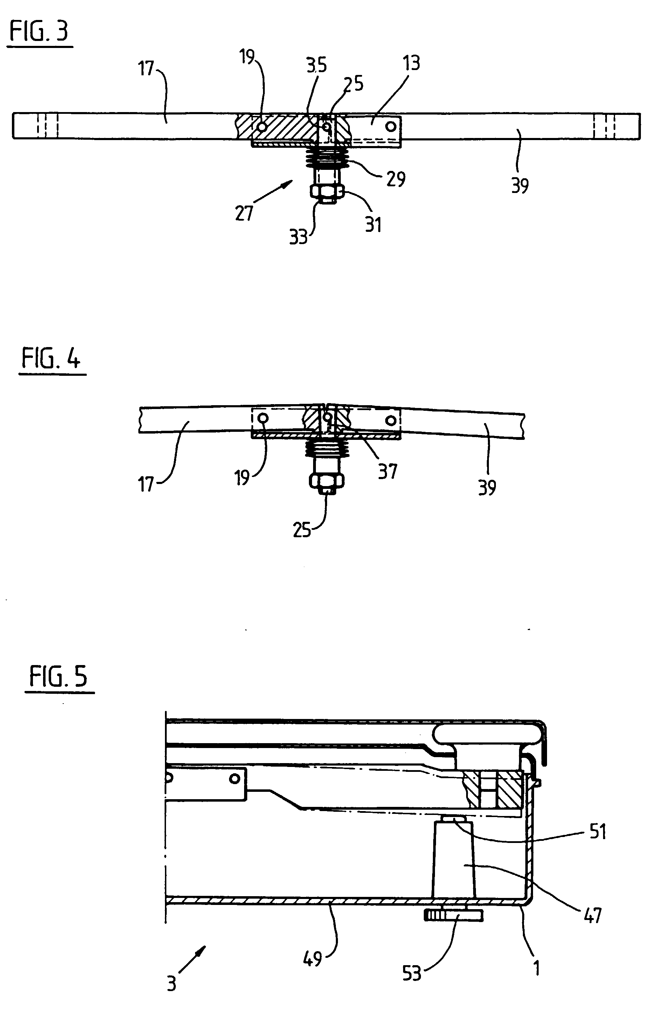

- Figur 3: einen Querschnitt durch das Widerlager mit den daran angreifenden Schenkeln der Rahmenteile,
- Figur 4: die beiden Rahmenteile unter Belastung,
- Figur 5: einen Ausschnitt der Waage mit dem Überlastanschlagteil.
- Figur 6: einen Längsschnitt durch die Schwenklagerung längs Linie IV - IV in Figur 7 und
- Figur 7: eine Draufsicht auf die Schwenklagerung

Im Gehäuse 1 einer Waage 3 ist eine Wägezelle 5 mit wegarmem Messwandler eingesetzt. Seitlich der Wägezelle 5 ist der Lastaufnehmer 7 sichtbar, über welchen eine auf die Waagschale 9 wirkende Kraft auf die Wägezelle 5 übertragen wird.

Am Lastaufnehmer 7 ist ein die Wägezelle 5 überspannendes Joch 11 befestigt, das an seinen Enden je eine Schwenklagerung 13 trägt, in welchen die Schenkelenden 15 zweier U-förmig ausgebildeter, als Rahmen dienender Hebel 17 schwenkbar befestigt sind. In den Schenkelenden 15 sind in einem Abstand a von den Stirnseiten Bohrungen 19 angebracht, in welche je ein Lagerstift 21 eingreift, dessen Enden in der Schwenklagerung 13 gehalten sind. Die Stirnflächen 23 der Schenkelenden 15 liegen einander mit geringem Abstand gegenüber und umgreifen den Zugzapfen 25 eines Widerlagers 27. Der Zugzapfen 25 ist axial verschiebbar in der Schwenklagerung 13 geführt und überragt deren Unterseite. Der Zugzapfen 25 bildet eine Koppelung der beiden Hebel 17.

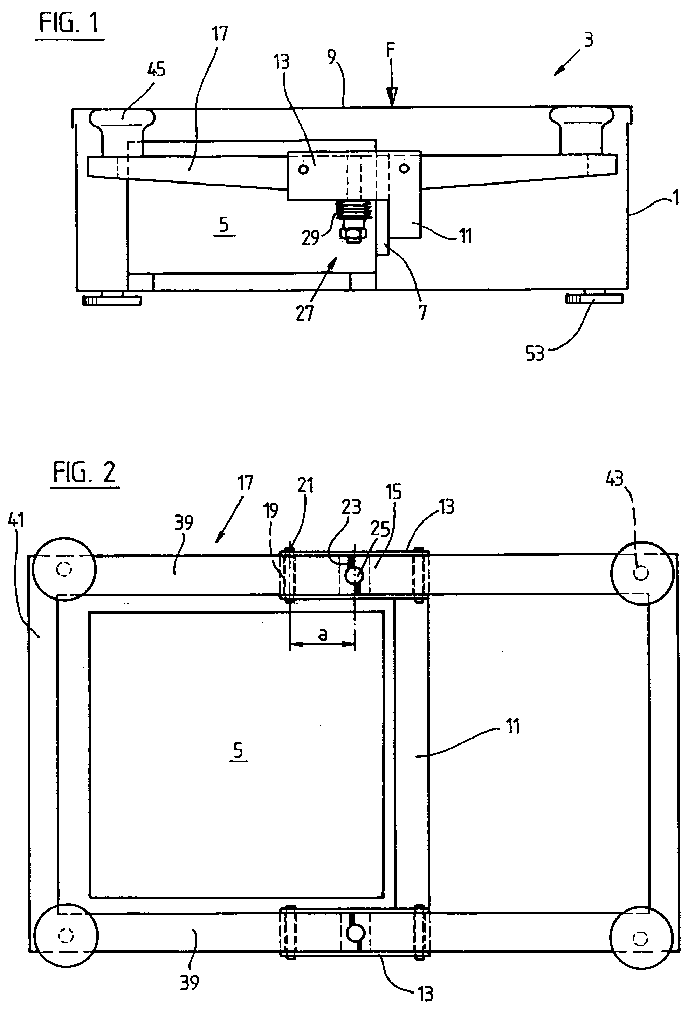

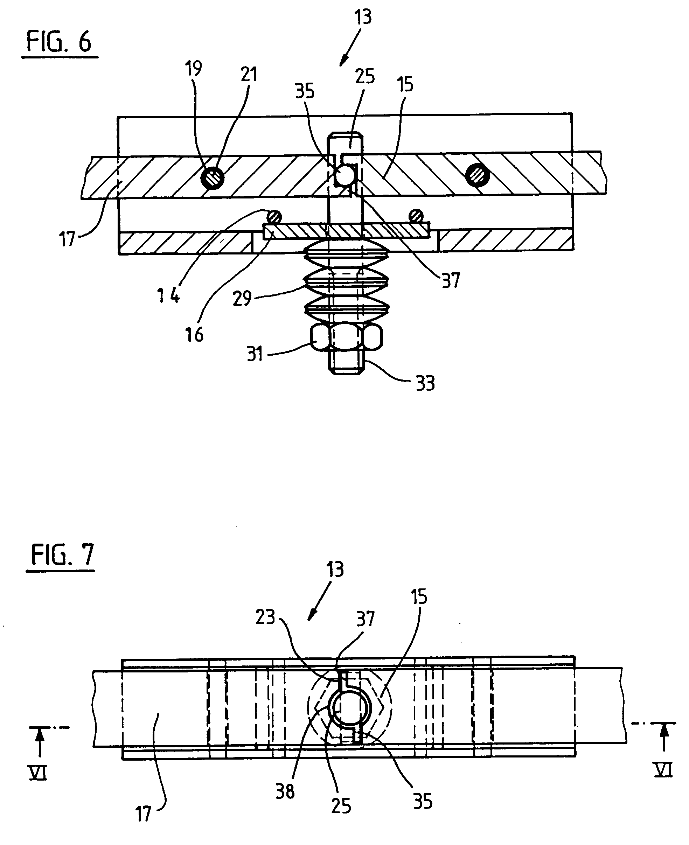

Ein Federpaket 29, das von unten an der Schwenklagerung 13 anliegt, z.B. an einer durch zwei in der Schwenklagerung 13 ortsfest angeordnete Stifte 14 abgestützten Ringscheibe 16, wird durch eine Spannmutter 31, die auf einem Gewinde 33 am Zugzapfen 25 geführt ist, vorgespannt. Das obere Ende des Zugzapfens 25 wird von einem radial verlaufenden Widerlagerbolzen 35 durchquert, der dazu bestimmt ist, als Auflagefläche für einen an der Stirnfläche 23 der Schenkelenden 15 angebrachten Vorsprung 37 zu dienen. Die Vorsprünge 37 weisen an ihrer am Widerlagerbolzen 35 angreifenden Fläche einen diesem angepassten Radius 38 auf, um eine spielarme Berührung zu erreichen. Dabei ist vorzugsweise jedes Schenkelende 15 mit einem Vorsprung 37 versehen, der nur an einer Seite des Zugzapfens 25 wenigstens von unten am Widerlagerbolzen 35 angreift, wobei die Vorsprüngen 37 derart angeordnet sind (vergl. Figuren 2,6 und 7), dass beide [-Hebel 17 gleich gestaltet sind (gleiche Bauteile für beide Rahmenhälften). Die beiden Schenkel 39 des Hebels 17 und der die Basis bildende Steg 41 ergeben - in Bezug auf den Lastbereich der Waage betrachtet - einen biegesteifen verwindungsarmen Rahmenteil. An den Ecken der Rahmenteile sind Bohrungen 43 zur Befestigung je eines pilzförmigen Dämpfungselementes 45 angebracht. Die Waagschale 9 liegt direkt oder auf einem Waagschalenträger auf den vier Dämpfungselementen 45 auf.

Die beiden Hebel 17 bzw. das Joch 11 liegen seitlich der Wägezelle 5 und umfassen diese. Beim Wägen mit Lasten, die innerhalb des Wägebereiches liegen und nicht auf die Waagschale 9 fallengelassen werden, wird die Kraft F von der Waagschale 9 über die 4 Dämpfungselemente, die aus Gummi oder einem entsprechenden elastischen Kunststoff bestehen, auf die Hebel 17, über die Widerlager 27 auf das Joch 11 und von dort auf den Lastaufnehmer 7 übertragen. Im Normalfall verhält sich folglich das System wie ein in sich starrer Körper. Fällt hingegen eine Last F, sie kann innerhalb oder ausserhalb des Wägebereiches der Waage 3 liegen, auf die Waagschale 9, so erfolgt vorerst ein Zusammenpressen der Dämpfungselemente 45 und anschliessend ein synchrones Verschwerken der beiden Hebel 17 um die Lagerungen an den Lagerstiften 21. Durch die Schwenkbewegung der beiden Hebel 17 heben die Vorsprünge 37 an den Schenkelenden 15 die Widerlagerbolzen 35 und damit die Zugzapfen 25 an. Dadurch werden die Federpakete 29 zusammengepresst und nehmen zumindest einen Teil der eingeleiteten Kraft F auf. Bei der Einleitung einer Überlast werden stets beide Hebel 17 geschwenkt, unabhängig davon, ob die Kraft F im Zentrum oder am Rande der Waagschale 9 auf das System wirkt, weil die Hebel 17 in sich sehr biegesteif ausgebildet und im Widerlager 27 miteinander gekoppelt sind.

Überschreitet die Überlast den durch die Federpakete bestimmten Überlastbereich, kommen die Hebel 17 im Bereich der Dämpfungselemente 45 in Anschlag mit einem Anschlagpuffer oder -sockel 47, welcher direkt auf dem Boden 49 des Gehäuses 1 aufgesetzt oder Teil desselben ist. Auf der Oberfläche des Sockels 47 kann ein elastischer Puffer 51 aufgelegt sein, der den Aufschlag der Hebel 17 dämpft. Wenn die Sockel 47 direkt über den Standfüssen 53 der Waage 3 angeordnet sind, so kann die Überlast direkt auf die Standfläche der Waage geleitet werden; eine mechanische Belastung des Gehäuses 1 wird dadurch vermieden.

## Patentansprüche

1. Waage mit einem gegen Ueberlast gesicherten Wägesystem, bei dem zwischen einem Lastaufnehmer (7) am Wägesystem und einer aufgesetzten Waagschale (9) zwei schwenkbare Hebel (17) eingesetzt sind, welche die Waagschale tragen, wobei die äusseren Hebelenden von unten an der Waagschale anliegen und deren innere Hebelenden in ein vertikal verschiebliches Widerlager (27) eingreifen, wobei das Widerlager derart unter der Rückstellkraft einer vorgespannten Feder (29) steht, dass bei Ueberlast beide Hebel schwenken und die Federkraft überwinden und für die sich absenkende Waagschale eine Parallelführung bilden, dadurch gekennzeichnet, dass das Wägesystem eine Wägezelle (5) umfasst, auf die der Lastaufnehmer (7) einwirkt; dass die beiden Hebel (17) als U-förmige, in sich starre Rahmenteile ausgebildet und mit den Schenkelenden (15) einander gegenüberliegend angeordnet und um in einem Abstand (a) von den Schenkelenden (15) liegende, in je einer Schwenklagerung (13) befestigte Achsen (21) schwenkbar mit einem die Schwenklagerungen (13) tragenden, am Lastaufnehmer (7) befestigten Joch (11) verbunden sind,und dass die Hebel (17) und das Joch (11) seitlich der Wägezelle (5) angeordnet sind.

2. Waage nach Anspruch 1 oder 2, dadurch gekennzeichnet, dass je ein Widerlager (27) zwischen den beiden sich gegenüberliegenden Paaren von Schenkelenden (15) der Hebel (17) liegt.

3. Waage nach einem der Ansprüche 1 oder 2, dadurch gekennzeichnet, dass auf den beiden Enden des Joches (11) in den Schwenklagerungen (13) je eines der Widerlager (27) eingesetzt ist und dass das Joch (11) mit seinem zentralen Bereich auf den Lastaufnehmer (7) aufgesetzt ist.

4. Waage nach einem der Ansprüche 1 bis 3, dadurch gekennzeichnet, dass jedes Widerlager (27) einen Zugzapfen (25) aufweist, in dessen oberem Ende ein Widerlagerbolzen (35) eingesetzt ist, an dem die Schenkelenden (15) angreifen, und dass das untere Ende des Zugzapfens (25) mit einem Gewinde versehen ist, auf das eine Spannmutter zum Spannen eines Federpaketes (29) aufgesetzt ist.

5. Waage nach Anspruch 4, dadurch gekennzeichnet, dass der Zugzapfen (25) im Widerlager (27) Axial verschieblich geführt ist, und dass die Schenkelenden (15) Vorsprünge (37) aufweisen, welche wenigstens von unten am Widerlagerbolzen (35) angreifen.

6. Waage nach einem der Ansprüche 1 bis 5, dadurch gekennzeichnet, dass an den Enden der Basis (41) der Hebel (17) Dämpfungselemente (45) aufgesetzt sind, auf denen die Waagschale (9) oder ein Waagschalenträger aufzuliegen bestimmt ist.

7. Waage nach Anspruch 6, dadurch gekennzeichnet, dass die Dämpfungselemente (45) pilzartig ausgebildet sind.

8. Waage nach einem der Ansprüche 1 bis 7, dadurch gekennzeichnet, dass unter der Basis (41) der Hebel (17) Anschlagsockel (47) angeordnet und auf dem Boden (49) des Waagengehäuses (1) abgestützt sind.

9. Waage nach Anspruch 8, dadurch gekennzeichnet, dass die Anschlagsockel (47) über den Standfüssen (53) der Waage (3) am Boden (49) befestigt sind.

## Claims

1. A balance with a weighing system which is safeguarded against overload, in which inserted between a load-receiving means (7) on the weighing system and a weighing pan (9) which is disposed thereon are two pivotable levers (17) which carry the weighing pan, wherein the outer lever ends bear from below against the weighing pan and their inner lever ends engage into a vertically displaceable support (27), wherein the support is subjected to the return force of a prestressed spring (29) in such a way that in the event of an overload both levers pivot and overcome the spring force and form a parallel guide means for the downwardly moving weighing pan, characterised in that the weighing system includes a weighing cell (5) on which the load-receiving means (7) acts; that the two levers (17) are in the form of U-shaped frame members which are rigid in themselves and are arranged with the limb ends (15) in mutually opposite relationship and are connected pivotably about axis members (21) disposed at a spacing (a) from the limb ends (15) and each fixed in a respective pivot mounting (13), to a yoke (11) which carries the pivot mountings (13) and which is fixed to the load-receiving means (7), and that the levers (17) and the yoke (11) are arranged laterally of the weighing cell (5).

2. A balance according to claim 1 or claim 2 characterised in that a respective support (27) is arranged between the two mutually oppositely disposed pairs of limb ends (15) of the levers (17).

3. A balance according to one of claims 1 and 2 characterised in that a respective one of the supports (27) is fitted on the two ends of the yoke (11) in the pivot mountings (13) and that the yoke (11) is fitted with its central region onto the load-receiving means (7).

4. A balance according to one of claims 1 to 3 characterised in that each support (27) has a pull pin (25), in the upper end of which is inserted a support pin (35) which is engaged by the limb ends (15), and that the lower end of the pull pin (25) is provided with a screwthread onto which is fitted a clamping nut for clamping a spring set (29).

5. A balance according to claim 4 characterised in that the pull pin (25) is axially displaceably guided in the support (27) and that the limb ends (15) have projections (37) which engage the support pin (35) at least from below.

6. A balance according to one of claims 1 to 5 characterised in that damping elements (45) are fitted at the ends of the bases (41) of the levers (17), the weighing pan (9) or a weighing pan carrier being intended to rest on the damping elements.

7. A balance according to claim 6 characterised in that the damping elements (45) are of a mushroom-like configuration.

8. A balance according to one of claims 1 to 7 characterised in that abutment bases (47) are arranged beneath the bases (41) of the levers (17) and are supported on the bottom (49) of the balance housing (1).

9. A balance according to claim 8 characterised in that the abutment bases (47) are fixed to the bottom (49) over the support feet (53) of the balance (3).

## Revendications

1. Balance à système de pesée protégé contre les surcharges, dans laquelle, entre un capteur de charge (7) monté sur le système de pesée et un plateau de balance (9) posé par-dessus, sont mis en oeuvre deux leviers pivotants (17) qui portent le plateau de la balance, les extrémités extérieures des leviers étant appliquées contre le dessous du plateau de la balance et leurs extrémités intérieures s'engageant dans un moyen de contre-appui (27) à déplacement vertical, le moyen de contre-appui étant soumis à la force de rappel d'un ressort précontraint (29), de façon qu'en cas de surcharge les deux leviers pivotent, surmontent la force du ressort et forment un moyen de guidage parallèle pour le plateau de balance descendant, caractérisée en ce que le système de pesée comporte une cellule de pesage (5) sur laquelle agit le capteur de charge (7), en ce que les deux leviers (17) sont conçus sous la forme d'éléments de bâti rigides en forme de U et se faisant face par les extrémités (15) de leurs branches et sont reliés, de façon pivotante, autour d'axes (21) situés à une distance (a) des extrémités (15) de leurs branches et fixés chacun dans un dispositif de montage pivotant (13), à un étrier (11) portant les dispositifs de montage pivotant et fixé au capteur de charge (7), et en ce que les leviers (17) et l'étrier (11) sont disposés latéralement par rapport à la cellule de pesage (5).

2. Balance selon la revendication 1, caractérisée en ce qu'un moyen de contre-appui (27) se trouve entre chacune des deux paires en vis-à-vis d'extrémités (15) des branches des leviers (17).

3. Balance selon l'une des revendications 1 ou 2, caractérisée en ce qu'un moyen de contre-appui (27) est disposé à chacune des deux extrémités de l'étrier (11) dans les dispositifs de montage pivotant (13), et en ce que l'étrier (11) repose sur le capteur de charge (7) avec sa zone centrale.

4. Balance selon l'une des revendications 1 à 3, caractérisée en ce que chaque moyen de contre-appui (27) comporte un axe de traction (25), dans l'extrémité supérieure duquel est logé un tourillon de contre-appui (35), sur lequel prennent appui les extrémités (15) des branches, et en ce que l'extrémité inférieure de l'axe de traction (25) comporte un filetage sur lequel est monté un écrou de serrage pour serrer un bloc de ressorts (29).

5. Balance selon la revendication 4, caractérisée en ce que l'axe de traction (25) est guidé avec une possibilité de déplacement axial dans le moyen de contre-appui (27), et en ce que les extrémités (15) des branches comportent des saillies (37) qui agissent au moins par-dessous sur le tourillon de contre-appui (35).

6. Balance selon l'une des revendications 1 à 5, caractérisée en ce qu'aux extrémités de la base (41) des leviers (17) sont disposés des éléments amortisseurs (45), sur lesquels le plateau (9) de balance ou un porte-plateau de balance est destiné à prendre appui.

7. Balance selon la revendication 6, caractérisée en ce que les éléments amortisseurs (45) ont la forme de champignons.

8. Balance selon l'une des revendications 1 à 7, caractérisée en ce que des embases de butée (47) sont disposées sous la base (41) des leviers (17) et prennent appui sur le fond (49) du coffret (1) de la balance.

9. Balance selon la revendication 8, caractérisée en ce que les embases de butée (47) sont fixées au fond (49) à l'aplomb des pieds (53) de la balance (3).
